Europäisches Patentamt

(19) European Patent Office

Office européen des brevets

(11) Publication number: **0 173 703**
**B1**

(12) **EUROPEAN PATENT SPECIFICATION**

(45) Date of publication of patent specification: **16.05.90**

(21) Application number: **85900993.8**

(22) Date of filing: **27.02.85**

(86) International application number:
**PCT/DK85/00016**

(87) International publication number:
**WO 85/03841 12.09.85 Gazette 85/20**

(51) Int. Cl.⁵: **A 01 D 17/06**

(54) **LIFTER FOR POTATOES AND OTHER SUBTERRANEAN VEGETATION PRODUCTS.**

(30) Priority: **29.02.84 DK 1260/84**

(43) Date of publication of application:
**12.03.86 Bulletin 86/11**

(45) Publication of the grant of the patent:
**16.05.90 Bulletin 90/20**

(84) Designated Contracting States:
**AT BE CH DE FR GB LI NL SE**

(56) References cited:
**DE-C- 830 259**
**FR-A- 607 898**
**GB-A-1 425 663**
**GB-A-2 067 434**
**GB-B- 676 239**
**NO-C- 6 909**

(73) Proprietor: **KVISTGAARD, Jens Peter**
**Hestbäkvej 31**
**Linde, DK-7500 Holstebro (DK)**

(72) Inventor: **KVISTGAARD, Jens Peter**
**Hestbäkvej 31**
**Linde, DK-7500 Holstebro (DK)**

(74) Representative: **Smulders, Theodorus A.H.J., Ir.**
**et al**
**Vereenigde Octrooibureaux Nieuwe Parklaan**
**107**
**NL-2587 BP 's-Gravenhage (NL)**

Courier Press, Leamington Spa, England.

## Description

The invention relates to a lifter for crop products such as potatoes comprising a cutting member to be led in the ground under the crop products to be lifted and including lateral cutting means for cutting from the ground a ribbon of earth comprising the crop products to be lifted in order to transport them to a conveyor means positioned rearwardly of the cutting member.

A similar lifter or harvesting machine is known from GB—A—1,425,663, describing a harvesting machine, in which the conveyor means are placed immediately after the cutting member.

The crops lifted by the cutting member are directly transferred to the conveyor means taking the form of a screen or bar chair belt in order that the earth, lifted together with the crops may fall through said screen.

Practice has shown that with this type of harvesting machine the percentage of damaged potatoes or other crops is relatively high.

The object of the invention is to provide a lifter or harvesting machine wherein the product to be lifted is handled with greater care and the percentage of damaged products is significantly decreased.

The lifter according to the invention comprises at least two delivery rolls, disposed between the rear edge of the cutting member and the front edge of the conveyor means, said rolls having a substantially smooth planar outer surface and being disposed in close proximity and parallel to each other, further comprising means for rotationally driving at least one of these delivery rolls, the orientation of the single delivery rolls being such that they are at least partly substantially horizontal in the working position of the lifter.

Surprisingly it has been found that with these delivery rolls a remarkable improvement is obtained compared to the known harvesting apparatus as described above, even when the machine is travelling at a higher velocity. No substantial mechanical damage is caused to products such as potatoes during the lifting and earth-separating process. Though the reason for this almost perfect operation of the lifter is not fully understood it is assumed that the earth-ribbon, surrounding the crop product is treated by the delivery rolls as a kind of waving carpet, whereby the earth is gently cracked from the crop product without any real earth separating process being effected.

When harvesting crop products on inclined fields the delivery rolls should prevent the side ways sliding of the lifted earth ribbon supported thereon. This is achieved by mounting the delivery rolls in an adjustable manner or by a division of each delivery roll into e.g. three rolls with a fixed central part, the outer parts being adjustable in a plane perpendicular to the direction of movement of the lifter.

The lifter in accordance with the invention can be used equally effectively in wet and in dry earth.

In GB—A—676,239 a harvesting machine is described, comprising delivery rolls which are disposed between the rear edge of the cutting member and the front edge of a conveyor means. These delivery rolls, however, are mounted in spaced relationship one behind the other, each delivery roll being a drum member of grid like construction.

From DE—C—830,259 a potato lifter is known, in which each delivery roll consists of a series of circular discs mounted on a shaft in spaced relationship.

The circular discs of one delivery roll extend into the space between the circular discs of the adjacent delivery rolls. The delivery rolls are placed in interposed relationship with the diameter of the circular discs increasing in the direction of the conveyor, disposed rearwardly of the delivery rolls. The delivery rolls of this potato lifter function as a sieve.

In order to adjust the harvesting machine to different working conditions the lifter according to the invention preferably comprises means for driving the respective delivery rolls at different rotational speeds.

Further preferred features are laid down in the sub-claims 3-9.

One embodiment of the lifter according to the invention will be described by way of example, referring to the accompanying drawings, wherein:

Fig. 1 illustrates in perspective view the essential parts of an embodiment of a potato lifter according to the invention;

Fig. 2 is a view similar to Fig. 1 but including an embodiment of drive means for the delivery rolls;

Fig. 3 is a view similar to Fig. 2, with an auxiliary conveyor being provided above and over the delivery rolls;

Fig. 4 illustrates in more detail an embodiment of an auxiliary conveyor as shown in Fig. 3; and

Fig. 5 illustrates a vertical cross section through a gearbox 24 to be used together with embodiments according to Fig. 2 and 3.

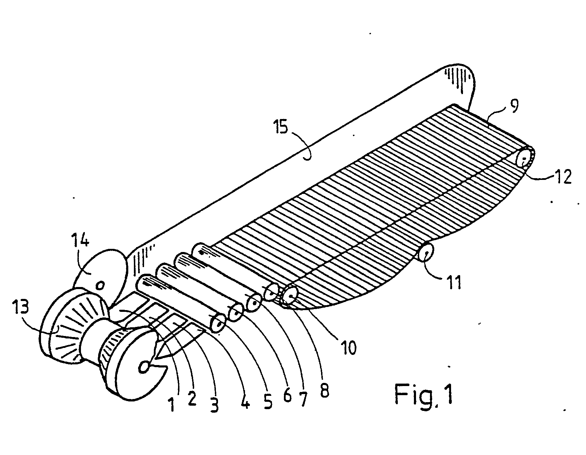

Fig. 1 of the drawings shows an embodiment according to the invention, comprising forwardly orientated pointed earth cutting members 1, 2, 3 and 4 to be passed under the potatoes to be dug up by the potato lifter. The potatoes together with the earth around them are pressed upwards along the upper surface of the cutting members when the potato lifter is moving forward, i.e. to the left as viewed in the drawings. A guide wheel 13 is disposed to lie, in operation, on the top of a row of growing potatoes, and the adjustable spacing between the guide wheel and the cutting members determines the depth to which the cutting member is inserted into the ground. A cutting wheel 14 is shown positioned besides the earth cutting members. Another corresponding cutting wheel (not shown) is positioned at the other side of the earth cutting members 4. The cutting wheels serve to cut a ribbon of earth, that is continuously lifted by the potato lifter.

Behind the earth cutting members the potato lifter comprises a conveyor 9, which for example is supported on supporting and driving rolls 10, 11 and 12. The conveyor comprises a number of parallel rods being positioned sufficiently close to one another so that the earth may fall down on the ground whereas the potatoes are guided further on. The conveyor may end freely so that the potatoes fall down on the surface of the ground, and after a suitable duration of time they are to be picked up again by the potato lifter for further processing in an apparatus following the lifter or to be transported by other means to a place of storage or for further treatment.

When as already described a series of delivery rolls 5, 6, 7, 8 with plain, smooth or comparatively featureless surface are positioned between the rear edge of the earth cutting members 1, 2, 3, 4 and the front end of the conveyor 9 which preferably is positioned somewhat lower than the last of the delivery roll 8, a remarkable improvement is obtained compared to the known harvesters as much less potatoes become damaged by the lifter even at higher travelling speeds as present day harvesters are able to achieve.

A side plate 15 forms one of the sides of the lifter and prevents potatoes from falling out sideways and serves simultaneously as a supporting means for the parts shown. On the other side of the lifter a corresponding side plate arrangement is provided (not shown in the drawing).

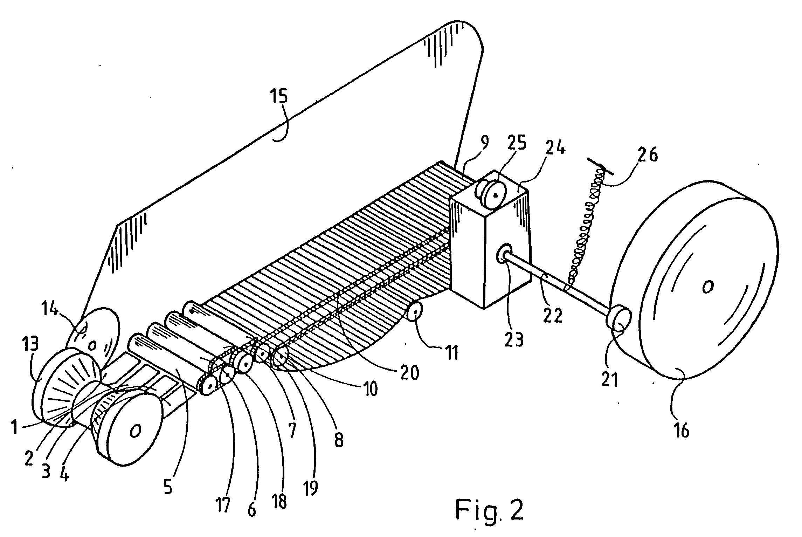

A drive mechanism for the delivery rolls 5, 6, 7, 8 is shown in Fig. 2. A hydraulic or oil pressure motor 25 positioned on top of a gearbox 24 (not further specified) drives gear ratio providing parts in the gearbox 24 driving a shaft 22 situated at 23 on box 24. A friction wheel 21 on the shaft 22 rests against the foremost side of a wheel 16 supporting the lifter. The driving speed of the circumference of the friction wheel 21 corresponds to the travelling speed of the complete potato lifter over the ground. A spring 26 pulls shaft 22 and friction wheel 21 upwards. It is thus achieved that if the motor 25 is driven fast enough, the friction wheel 21 is going to run at a higher position on the wheel 16 and when lifted sufficiently high becomes totally free from wheel 16. Through a suitable drive ratio in the gearbox 24 the friction wheel 21 is able directly to drive a chain 20 from a sprocket (not shown) at gearbox 24, on the one hand, and on the other hand the friction wheel 21, through shaft 22 influences the motor 25 so that the driving power of the motor is decreased when the friction wheel has been raised too much. It is thus achieved that the chain 20 is driven at a speed which is linearly proportional to the speed of travel the potato lifter. A sprocket on the delivery roll 8 is driven by chain 20. A further sprocket connected with delivery roll 8 drives a chain 19, which through a sprocket drives the delivery roll 7, which on its side through a chain 18 and two sprockets drives the delivery roll 6, which on its side through a chain 17 and two further sprockets drives delivery roll 5. The sprockets could be provided with an equal amount of teeth, whereby all the delivery rolls are running at the same speed. But if the driving sprockets on delivery rolls 8, 7, 6 and 5 possess for example 16, 17, 18 and 19 teeth, a different rotation speed of the rolls is obtained. Suitably a good result may be obtained with a circumferential velocity of the foremost delivery roll 5, which is equal to the travelling velocity of the lifter plus 10 percent. It is noted that a linearly increasing velocity of the circumferences from the foremost to the rearmost of the delivery rolls is not fully attained by this embodiment, but an improvement in relation to that, otherwise attained through the invention, is obtained.

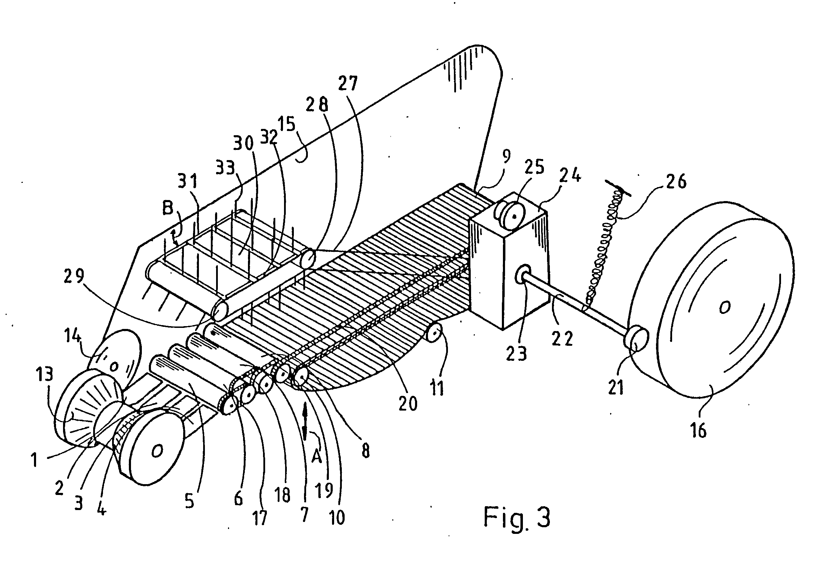

An embodiment comprising an auxiliary conveyor is shown in Fig. 3. The auxiliary conveyor 30 carries protruding spikes 33 sitting on transverse rods connected to belts 31 and 32 of the conveyor, which are arranged to be driven by wheels or rollers 28, 29, the rear one being driven through a chain 27 which may be driven from the same drive mechanism as used for the delivery rolls 5, 6, 7, 8 to effect synchronism therewith.

Conveyors 30 and 9 may each be supported by pivotable frames being directly or indirectly pivoted to, or connected by means of a swinging link suspension with, the side plates 15, so that especially the front end spacing from the top of the delivery rolls 5, 6, 7, 8 is adjustable. If the swinging link suspension is executed decidedly parallelogramlike the position of the conveyor or conveyors may be adjustable in the longitudinal direction of the potato lifter, too. As such supporting devices are known per se, only the directions of adjustment are shown in the drawing by means of arrows A and B for conveyor 9 and conveyor 30, respectively. With suitable fastening members of any known kind a chosen position may be fixed until a readjustment is undertaken, or the adjustment may be remote controlled for example through one or more hydraulic piston-and-cylinder units.

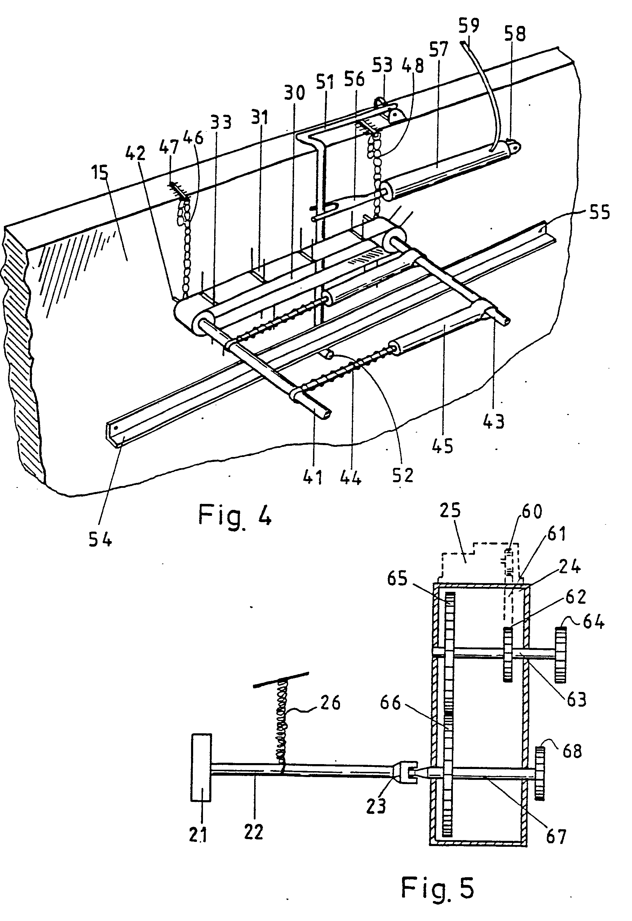

A possible embodiment of the auxiliary conveyor is shown in Fig. 4 of the drawings. In this embodiment the front shaft 41 carrying a sprocket 29, not shown in Fig. 4, at its protruding ends carries stop bushings (not shown) suspended in chains, of which a chain 46 is illustrated. The upper ends of the chains are hanging in hooks welded or otherwise secured to side plates 15 through fastening members 47. Corresponding chains, as chain 48, are arranged at the rear shaft 43 carrying the sprocket 28 (not shown in Fig. 4). Tightening members 44, 45 for the tightening of the belts 31 and 32, of which only 31 is shown in Fig. 4, may be positioned between the shafts 41 and 43. They may comprise an external spring on a piston 44 cooperating with a cylinder 45.

An angle-section rail 54 which for example may mechanically cooperate with a corresponding angle-section rail at the opposite side of the potato lifter is supported as shown at 55. The angle-section rails are able to grip the shaft ends such as 42 from below and simultaneously lift the conveyor 30 upwards so that after lowering it may be reused with unaltered operational position of the conveyor inside the potato lifter. A manually activatable fastening member may be provided to keep the conveyor in a position determined by the rails. A remote controlled lifting and lowering arrangement by means of the angle shaped rails may be embodied as shown, comprising a bent arm 51 with a gripping means 52 gripping the rails and a hydraulic drive cylinder 57 or other drive means pivotably supported at 58 to the side plates 15. The cylinder 57 comprises a piston 56 and a hose 59 for hydraulic fluid.

An embodiment of the internal parts of the gearbox 24 is shown in Fig. 5 of the drawings. The parts 21, 22, 26 and 23 have already been described above. A drive wheel 60 is connected in known manner to drive a drive wheel on shaft 63, which carrying a sprocket for chain 27 which drives the auxiliary conveyor 30. Through gear wheels 65 and 66 a shaft 67 carrying a sprocket 68 for the driving of chain 20, driving the delivery rolls 5, 6, 7, 8, is caused to rotate in opposite direction. As already described, the sprockets 64 and 68 drive the friction wheel 21 when the drive motor 25 receives no drive energy producing means or the supply hereof is too low, whereas the friction wheel 21 is lifted upwards to lessoned grip in the wheel 16 when sufficient supply is present to the motor 25. By means of cardan shaft 23, and when a large angle is formed between the shafts 67 and 22, a certain uneven drive velocity of the delivery rolls 5, 6, 7, 8 advantageously can be provided.

It is remarked, that an earth cutting member may comprise more single cutting members 1, 2, 3, 4.

## Claims

1. Lifter for crop products such as potatoes comprising a cutting member (1, 2, 3, 4) to be led in the ground under the crop products to be lifted and including lateral cutting means (14), for cutting from the ground a ribbon of earth comprising the crop products to be lifted in order to transport them to a conveyor means (9) positioned rearwardly of the cutting member (1, 2, 3, 4), characterized in that at least two delivery rolls (5, 6, 7, 8) are disposed between the rear edge of the cutting member (1, 2, 3, 4) and the front edge of the conveyor means (9), said rolls having a substantially smooth planar outer surface, and being disposed in close proximity and parallel to each other, and in that means (24) are provided for rotationally driving at least one of these delivery rolls (5, 6, 7, 8), the orientation of the single delivery rolls being such that they are at least partly substantially horizontal in the working position of the lifter.

2. Lifter according to claim 1, characterized in that drive means (25) are present to drive the respective delivery rolls (5, 6, 7, 8) at different rotational speeds, the circumferential velocity of the delivery rolls (5 or 6 or 7) adjacent the cutting member (1, 2, 3, 4) being somewhat lower than the circumferential velocity of the delivery rolls (6 or 7 or 8) adjacent the front edge of the conveyor means (9).

3. Lifter according to claim 2, characterized in that each of the said driven delivery rolls (5, 6, 7, 8) has substantially the same outer diameter.

4. Lifter according to claims 1, 2 or 3, characterized in that drive means are interposed between the at least one of the supporting wheels (16) and at least one of the delivery rolls (5, 6, 7, 8), and in that gear transmission means are provided for controlling the circumferential velocity of said one of the delivery rolls (5, 6, 7, 8).

5. Lifter according to claim 4, characterized in that the drive means (24) is a gear box comprising two drive inputs being connected respectively to a drive motor (25) and to a friction wheel (21) friction coupled to one of the lifter supporting wheels (16) and simultaneously mutually cooperating through the gear transmission (24) to produce a combined drive output, and whereby the reaction from the drive motor (25) through the gear transmission to the input coupled to the friction wheel (21) below a certain peripheral velocity of the lifter supporting wheel (16) aided by the action of a spring force (26) lowers, or to a certain degree loosens, the friction coupling between the friction wheel (21) and the lifter supporting wheel (16) so that the drive motor (25) mainly delivers the drive output from the gear box (24), and when the peripheral velocity of the lifter supporting wheel (16) is above the said velocity the friction wheel (21) by its rotation delivers the larger or the complete portion of drive output from the gear box (24), in which case the friction wheel (21) reacts to the drive motor (25) through the gear transmission (24).

6. Lifter according to claim 1, 2, 3, 4 or 5, characterized in that an auxiliary conveyor (30) is provided, which extends over at least a portion of at least one of the delivery rolls (5, 6, 7, 8), and in that this auxiliary conveyor cooperates with said at least one of the delivery rolls (5, 6, 7, 8) to assist in conveying the lifted crop products.

7. Lifter according to claim 6, characterized in that the auxiliary conveyor (30) includes a plurality of protruding and yielding means (33) for conveying the crop products.

8. Lifter according to claim 6 or 7, characterized in that means are provided for adjusting the distance between the delivery rolls (5, 6, 7, 8) and the auxiliary conveyor (30).

9. Lifter according to claim 1, 2, 3, 4, 5, 6, 7 or 8, characterized by means for mounting the first mentioned conveyor (9) at a position lower than at least one of the delivery rolls (5, 6, 7, 8), including means for adjusting a level between a working surface of this conveyor (9) and the said at least one of the delivery roll means (5, 6, 7, 8).

## Patentansprüche

1. Roder für Ernteprodukte, z.B. Kartoffeln, versehen mit einem in das Erdreich unter den zu rodenden Ernteprodukten einzuführenden Schneidorgan (1, 2, 3, 4) und mit seitlichen Schneidmitteln (14) zum Ausschneiden aus dem Erdreich eines Erdstreifens mit den zu rodenden Ernteprodukten, um diese zu einem hinter dem Schneidorgan (1, 2, 3, 4) angeordneten Fördermittel (9) zu transportieren, dadurch gekennzeichnet, dass mindestens zwei Abgabewalzen (5, 6, 7, 8) zwischen dem hinteren Rand des Schneidorgans (1, 2, 3, 4) und dem vorderen Rand des Fördermittels (9) angeordnet sind, welche Walzen eine im wesentlichen glatte ebene Aussenfläche aufweisen, dicht nebeneinander angeordnet sind und parallel zueinander verlaufen, und dass Mittel (24) zum rotierenden Antrieb mindestens einer dieser Abgabewalzen (5, 6, 7, 8) vorgesehen sind, wobei die einzelnen Abgabewalzen derart orientiert sind, dass sie in der Arbeitsstellung des Roders mindestens teilweise im wesentlichen waagerecht verlaufen.

2. Roder nach Anspruch 1, dadurch gekennzeichnet, dass Antriebsmittel (25) zum Antrieb der jeweiligen Abgabewalzen (5, 6, 7, 8) mit verschiedenen Rotationsgeschwindigkeiten vorhanden sind, wobei die Umfangsgeschwindigkeit der Abgabewalzen (5 oder 6 oder 7) im Bereich des Schneidorgans (1, 2, 3, 4) etwas niedriger als die Umfangsgeschwindigkeit der Abgabewalzen (6 oder 7 oder 8) im Bereich des vorderen Randes des Fördermittels (9) ist.

3. Roder nach Anspruch 2, dadurch gekennzeichnet, dass jede der angetriebenen Abgabewalzen (5, 6, 7, 8) im wesentlichen denselben Aussendurchmesser aufweist.

4. Roder nach Anspruch 1, 2 oder 3, dadurch gekennzeichnet, dass Antriebsmittel zwischen mindestens einem der Stützräder (16) und mindestens einer der Abgabewalzen (5, 6, 7, 8) angeordnet sind, und dass Uebersetzungsmittel zum Steuern der Umfangsgeschwindigkeit der genannten einen der Abgabewalzen (5, 6, 7, 8) vorgesehen sind.

5. Roder nach Anspruch 4, dadurch gekennzeichnet, dass das Antriebsmittel (24) ein Getriebe mit zwei Antrieben ist, die jeweils mit einem Antriebsmotor (25) und einem mit einem der Stützräder (16) für den Roder reibungsgekuppelten Reibrad (21) verbunden sind, und die durch die Uebersetzung (24) gleichzeitig miteinander zusammenwirken, um einen kombinierten Antrieb zu bewirken, und wobei die Reaktion vom Antriebsmotor (25) durch die Uebersetzung zu dem mit dem Reibrad (21) gekuppelten Antrieb unter einer bestimmten Umfangsgeschwindigkeit des Stützrades (16) mit Hilfe der Wirkung einer Federkraft (26) die Reibungskupplung zwischen dem Reibrad (21) und dem Stützrad (16) verringert oder bis zu einem gewissen Grade löst, so dass der Antriebsmotor (25) im wesentlichen den Abtrieb vom Getriebe (24) liefert, und wenn die Umfangsgeschwindigkeit des Stützrades (16) die genannte Geschwindigkeit übersteigt, das Reibrad (21) durch seine Rotation den ·grösseren oder vollständigen Teil des Abtriebes vom Getriebe (24) liefert, in welchem Fall das Reibrad (21) durch die Uebersetzung (24) auf den Antriebsmotor (25) reagiert.

6. Roder nach Anspruch 1, 2, 3, 4 oder 5, dadurch gekennzeichnet, dass ein Hilfsfördermittel (30) vorgesehen ist, das sich über mindestens einen Teil der Abgabewalzen (5, 6, 7, 8) erstreckt, und dass dieses Hilfsfördermittel mit der genannten einen der Abgabewalzen (5, 6, 7, 8) zusammenwirkt, um den Transport der gerodeten Ernteprodukte Vorschub zu leisten.

7. Roder nach Anspruch 6, dadurch gekennzeichnet, dass der Hilfsförderer (30) eine Anzahl vorspringender und nachgebender Mittel (33) zum Transport der Ernteprodukte aufweist.

8. Roder nach Anspruch 6 oder 7, dadurch gekennzeichnet, dass Mittel zum Einstellen des Abstandes zwischen den Abgabewalzen (5, 6, 7, 8) und dem Hilfsförderer (30) vorgesehen sind.

9. Roder nach Anspruch 1, 2, 3, 4, 5, 6, 7 oder 8, gekennzeichnet durch Mittel zum Anordnen des erstgenannten Fördermittels (9) an einer Stelle unterhalb mindestens einer der Abgabewalzen (5, 6, 7, 8) und durch Mittel zum Einstellen eines Niveaus zwischen einer Arbeitsfläche dieses Fördermittels (9) und der genannten mindestens einen der Abgabewalzen (5, 6, 7, 8).

**Revendications**

1. Une arracheuse pour produits de récolte tels que des pommes de terre, comprenant un organe de coupe (1, 2, 3, 4) à conduire dans le sol au-dessous des produits de récolte à arracher et incorporant des moyens de coupe latérale (14) pour couper du sol une bande de terre comprenant les produits de récolte à arracher pour les transporter vers des moyens de transport (9) placés derrière l'organe de coupe (1, 2, 3, 4), caractérisée en ce qu'au moins deux cylindres délivreurs (5, 6, 7, 8) sont prévus entre le tranchant arrière de l'organe de coupe (1, 2, 3, 4) et le tranchant avant des moyens de transport (9), lesdits cylindres ayant une surface extérieure plane substantiellement lisse, et étant arrangés tout près l'un de l'autre et parallèle l'un à l'autre, et en ce qu'on a prévu des moyens (24) pour la commande rotative d'au moins un desdits cylindres délivreurs (5, 6, 7, 8), l'orientation des seuls cylindres délivreurs étant telle qu'ils sont au moins partiellement substantiellement horizontaux dans la position de travail de l'arracheuse.

2. Une arracheuse selon la revendication 1, caractérisée en ce que des moyens de commande (25) sont prévus pour commander les cylindres délivreurs respectifs (5, 6, 7, 8) à des vitesses rotatives différentes, la vitesse périphérique des cylindres délivreurs (5) ou (6) ou (7) près de l'organe de coupe (1, 2, 3, 4) étant légèrement inférieure à la vitesse périphérique des cylindres délivreurs (6) ou (7) ou (8) près du tranchant avant des moyens de transport (9).

3. Une arracheuse selon la revendication 2, caractérisée en ce que chacun desdits cylindres délivreurs commandés (5, 6, 7, 8) a substantiellement le même diamètre extérieur.

4. Une arracheuse selon les revendications 1, 2 ou 3, caractérisée en ce que des moyens de commande sont interposés entre l'au moins un des roues de support (16) et au moins un des cylindres délivreurs (5, 6, 7, 8), et en ce que des moyens de transmission par engrenages sont prévus pour contrôler la vitesse péripherique dudit un des cylindres délivreurs (5, 6, 7, 8).

5. Une arracheuse selon la revendication 4, caractérisée en ce que le dispositif de commande (24) est une boîte à engrenages comportant deux moyens d'entrée reliés respectivement à un moteur de commande (25) et à une roue de friction (21) couplée par friction à l'une des roues de support d'arracheuse (16) et simultanément coopérant mutuellement par l'intermédiaire de la transmission par engrenages (24) pour produire une puissance de sortie combinée, alors que la réaction du moteur de commande (25), par l'intermédiaire de la transmission par engrenages, à l'entrée couplée à la roue de friction (21) au-dessous d'une certaine vitesse périphérique de la roue de support d'arracheuse (16), aidée par l'action d'un ressort (26), diminue ou à un certain degré relâche, l'accouplement à friction entre la roue de friction (21) et la roue de support d'arracheuse (16) de sorte que le moteur de commande (25) principalement délivre la puissance de sortie à partir de la boîte à engrenages (24), et lorsque la vitesse périphérique de la roue de support d'arracheuse (16) excède ladite vitesse, la roue de friction (21), par sa rotation, délivre la portion plus large ou complète de la puissance de sortie à partir de la boîte à engrenages (24), en quel cas la roue de friction (21) réagit au moteur de commande (25) par l'intermédiaire de la transmission par engrenages (24).

6. Une arracheuse selon la revendication 1, 2, 3, 4 ou 5, caractérisée en ce qu'on a prévu un transporteur auxiliaire (30) s'étendant sur au moins une portion d'au moins un des cylindres délivreurs (5, 6, 7, 8) et en ce que ledit transporteur auxiliaire coopère avec ledit au moins un des cylindres délivreurs (5, 6, 7, 8) pour assister au transport des produits de récolte arrachés.

7. Une arracheuse selon la revendication 6, caractérisée en ce que le transporteur auxiliaire (30) comprend une pluralité de moyens saillants et flexibles (33) pour transporter les produits de récolte.

8. Une arracheuse selon la revendication 6 ou 7, caractérisée en ce qu'on a prévu des moyens pour ajuster la distance entre les cylindres délivreurs (5, 6, 7, 8) et le transporteur auxiliaire (30).

9. Une arracheuse selon la revendication 1, 2, 3, 4, 5, 6, 7 ou 8, caractérisée par des moyens pour monter le transporteur premier nommé (9) à une position inférieure à au moins un des cylindres délivreurs (5, 6, 7, 8) y inclus des moyens pour ajuster un niveau entre une surface de travail dudit transporteur (9) et ledit au moins un des moyens de cylindre délivreur (5, 6, 7, 8).

Fig. 1

Fig. 2

Fig. 3

3

Fig. 4

Fig. 5